# EUROPEAN PATENT APPLICATION

(11) **EP 2 177 326 A2**
(43) Date of publication of application: **21.04.2010**
(21) Application number: 08017950.0
(22) Date of filing: 14.10.2008
(51) Int. Cl.: B25J 9/16, B21D 5/02, B21D 43/24

(54) **Method for aligning a workpiece to a robot**

(71) Applicant: Safan B.V., 7241CW Lochem (NL)
(72) Inventor: Weijs, Harmen Jan, 7271 AP Borculo (NL); Veltkamp, Hendrik Teunis, 7242 DC Lochem (NL); Visschers, Dirk, 7271 ZP Borculo (NL)
(74) Representative: 't Jong, Bastiaan Jacob

(57) **Abstract**

The invention relates to a method for aligning a workpiece (15) to a robot, said robot comprising a gripper (10) for gripping the workpiece (15) and a detail camera (12), the method comprising the steps of:
- moving the gripper (10) over a stack (14) of workpieces;
- gripping the upper workpiece;
- moving the robot with the gripped workpiece (15) in a predetermined position, in which at least part of the workpiece is in the view of the detail camera (12);
- detecting a predefined contour (17) in at least one image of the detail camera;
- calculating the difference between an expected position of the predefined contour (17) and the detected position of the contour to align the workpiece to the robot.

## Description

The invention relates to a method for aligning a workpiece to a robot.

In the automation of manufacturing processes robots can be used to manipulated workpieces. When manipulated workpieces need to be machined, it is necessary, that the control of the robot needs to know how the workpiece is aligned to the robot.

It is common, that a robot picks a workpiece with a gripper and that the robot moves the workpiece to an alignment table. For example such an alignment table has a tilted surface with two upstanding sides. When the workpiece is placed on the tilted surface, it will slide downwards and abut to the upstanding sides. This position of the workpiece abutting both upstanding sides, is known to the robot and when the workpiece is picked up again by the robot, the alignment of the workpiece to the robot is known.

This method for aligning a workpiece to a robot has some disadvantages. One of the disadvantages is that this alignment method is only possible for workpieces with a relatively simple outer edge. If too many extensions and/or holes are present in the outer edge, the workpiece could have several orientations, while abutting the upstanding edges of the alignment table.

Another disadvantage of the prior art alignment method is the additional time needed for aligning the workpiece to the robot. The releasing of the workpiece on the alignment table and again picking up of the workpiece takes time. This again picking up of the workpiece has the risk that the alignment is disturbed. In particular with vacuum based grippers, the gripper has some flexibility, which could result in a small misalignment when again picking up the workpiece.

It is an object of the invention to provide a method for aligning a workpiece to a robot in which the disadvantages of the prior art are reduced.

This object is achieved with a method according to the invention for aligning a workpiece to a robot, said robot comprising a gripper for gripping the workpiece and a detail camera, the method comprising the steps of:
- moving the gripper over a stack of workpieces;
- gripping the upper workpiece;
- moving the robot with the gripped workpiece in a predetermined position, in which at least part of the workpiece is in the view of the detail camera;
- detecting a predefined contour in at least one image of the detail camera;
- calculating the difference between an expected position of the predefined contour and the detected position of the contour to align the workpiece to the robot.

With this method according to the invention, there is no need anymore for a separate alignment table. After the workpiece is gripped by the robot, it is possible to determine the exact position of the workpiece based on the images received from the detail camera. With this exact position it is possible to calculate the deviation from a desired position. Then with the calculated deviation it possible to correct the movements of the robot, such that the workpiece is moved to the correct desired position.

Furthermore, it is no longer necessary to release the workpiece to have it aligned, after which it again should be picked up. So, when having calculated the alignment of the workpiece, there is no possibility of misalignment due to re-picking up the workpiece as is common with the prior art.

In a preferred embodiment the robot comprises an overview camera and the stack of workpieces is in the view of the overview camera, and the method comprises the step of detecting the position of the upper workpiece of the stack using at least one image of the overview camera.

With the overview camera it is possible to determine an initial rough position of the workpiece. This makes sure, that when a detail of the workpiece is viewed by the detail camera, this detail is actually within sight of the camera. It is furthermore possible to detect whether the workpiece has the correct orientation. For example with a non-symmetrical workpiece, like a square with only one corner knotted, the workpiece has to be gripped in the right orientation to achieve the correct bending.

In another embodiment of the method according to the invention the overview camera has a larger focus distance than the detail camera. The overview camera and detail camera can be combined in a multifocal camera.

Yet another embodiment of the method according to the invention comprises the step of illuminating the workpiece with a light source to improve the contrast of the images.

The invention also relates to a press brake comprising:
- a frame;
- two beams for clamping press brake tools, said beams being arranged in the frame and being movable towards to and away from each other;
- a robot movable along the length of the beams, said robot comprising a gripper for gripping a workpiece, and a detail camera;
- control means for controlling the movements of the beams and for controlling the robot.

In the press brake industry the bending process is continuously being developed and press brakes are more and more automated. This development has resulted in the use of robots to manipulate metal sheets. These metal sheets are placed between the two beams of the press brakes to arrange bends in the metal sheets. In such cases it is desired that the control means knows the orientation and position of the gripped workpiece, in particular the alignment of the workpiece to the robot. With the detail camera it is possible for the control means to register the workpiece and determine the alignment of the workpiece to the robot.

Preferably the control means operates the robot according to the method of the invention.

In a preferred embodiment of the press brake according to the invention the control means process the images of the camera's and calculates the difference between the position of an expected contour and a detected contour in order to compensate for misalignment when operating the robot.

In yet another embodiment of the press brake according to the invention a light source is arranged adjacent the camera's. With this light source the workpiece can be illuminated to provide a better contrast of the images, which improves the detection of the predefined contour.

In still another embodiment of the press brake according to the invention, the press brake further comprises a balance on which a stack of workpieces can be placed, said balance providing weight data to the control means. With this balance it is possible to detect whether the robot picks up only one workpiece or more. This can be detected by the change of weight of the stack of workpieces.

These and other advantages will be elucidated in conjunction with the accompanying drawings.
Figure 1 shows a perspective view of an embodiment of a press brake according to the invention in a first position.
Figure 2 shows a schematic image of the overview camera of the press brake of figure 1.
Figure 3 shows a perspective view of the press brake according to figure 1 in a second position.
Figure 4 shows a schematic image of the detail camera of the press brake of figure 3.
Figure 5 shows a perspective view of the press brake according to figure 1 in a third position.

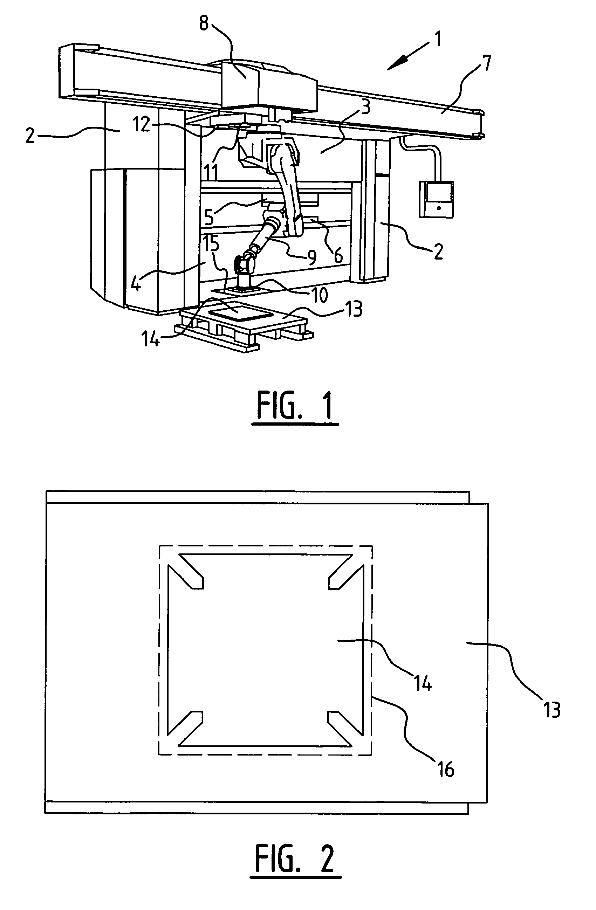

Figure 1 shows a perspective view of a press brake 1. The press brake 1 has two side frame portions 2, which are connected by a movable upper beam 3 and a stationary lower beam 4. Press brake tools 5, 6, are clamped into the upper beam 3 and lower beam 4 respectively.

At the top of the two side frame portions 2 is arranged a traverse beam 7, on which a carriage 8 is movably arranged. This carriage 8 carries a robot arm 9 having a gripper 10.

The carriage 8 is furthermore provided with an overview camera 11 and a detail camera 12. Although it is preferred that the cameras are arranged on the carriage, the cameras could also be arranged on a separate carriage or at a stationary position.

In figure 1 the carriage 8 with the robot arm 9 is positioned over a balance 13 on which a stack 14 of workpieces 15 is arranged. The overview camera 11 registers an image, which is depicted in figure 2. In figure 2 it is clear that the overview camera 11 sees the balance 13 and the stack 14 of workpieces 15.

Based on the image, the press brake 1 detects the stack 14, which is shown by the interrupted lines 16. With this detection the gripper 10 can be placed roughly in the center of a workpiece 15.

Then the workpiece 15 is gripped by the gripper 10 of the robot arm 9 and lifted from the stack 14. By reading the weight data of the balance 13 it can be determined whether only one workpiece 15 is gripped or an additional one is attached to the gripped workpiece 15.

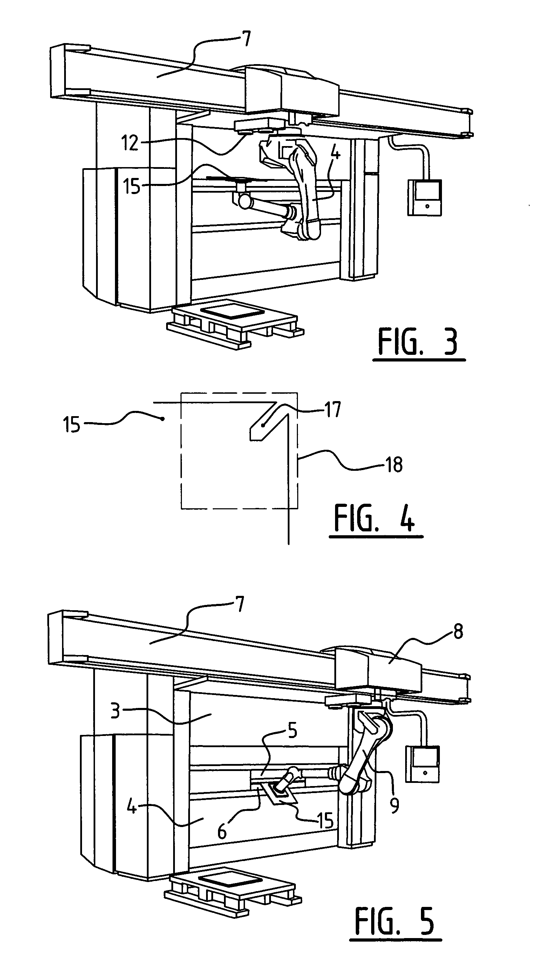

As shown in figure 3, the workpiece 15 is turned, lifted up and kept before the detail camera 12. The image of the detail camera 12 is shown in figure 4. The workpiece 15 has a groove 17 at the corner of the workpiece 15, which provides a recognizable contour from which the exact orientation of the workpiece 15 can be determined. The control means of the press brake 1 do recognize this contour in the square 18. When the position of the gripper 10 is known, it can now be determined how the alignment of the workpiece 15 is relative to the robot arm 9.

Finally, the workpiece 15 can be moved in between the press brake tools 5 in the upper beam 3 and the press brake tools 6 in the lower beam 4. The upper beam 3 and lower beam 4 are then pressed together, such that a bend is provided in the workpiece 15 (see figure 5). The robot arm 9 is programmed to support the workpiece 15 when the bending is performed.

## Claims

1. Method for aligning a workpiece to a robot, said robot comprising a gripper for gripping the workpiece and a detail camera, the method comprising the steps of:
- moving the gripper over a stack of workpieces;
- gripping the upper workpiece;
- moving the robot with the gripped workpiece in a predetermined position, in which at least part of the workpiece is in the view of the detail camera;
- detecting a predefined contour in at least one image of the detail camera;
- calculating the difference between an expected position of the predefined contour and the detected position of the contour to align the workpiece to the robot.

2. Method according to claim 1, wherein the robot comprises an overview camera and wherein the stack of workpieces is in the view of the overview camera, the method comprising the step of detecting the position of the upper workpiece of the stack using at least one image of the overview camera;

3. Method according to claim 2, wherein the overview camera has a larger focus distance than the detail camera.

4. Method according to claim 3, wherein the overview camera and detail camera are combined in a multifocal camera.

5. Method according to any of the preceding claims, further comprising the step of illuminating the workpiece with a light source to improve the contrast of the images.

6. Press brake comprising:
- a frame;
- two beams for clamping press brake tools, said beams being arranged in the frame and being movable towards to and away from each other;
- a robot movable along the length of the beams, said robot comprising a gripper for gripping a workpiece and a detail camera;
- control means for controlling the movements of the beams and for controlling the robot.

7. Press brake according to claim 6, wherein the control means operates the robot according to the method of any of the claims 1 - 5.

8. Press brake according to claim 7, wherein the control means process the images of the camera's and calculates the difference between the position of an expected contour and a detected contour in order to compensate for misalignment when operating the robot.

9. Press brake according to any of the claims 6 - 8, wherein the robot further comprises an overview camera.

10. Press brake according to any of the claims 6 - 9, wherein a light source is arranged adjacent the camera's.

11. Press brake according to any of the claims 6 - 10, further comprising a balance on which a stack of workpieces can be placed, said balance providing weight data to the control means.
